# EUROPÄISCHE PATENTSCHRIFT

(11) **EP 0 411 230 B1**
(45) Veröffentlichungstag und Bekanntmachung des Hinweises auf die Patenterteilung: **15.12.1993**
(21) Anmeldenummer: 89810589.5
(22) Anmeldetag: 04.08.1989
(51) Int. Cl.: G01L 19/14

(54) **Druckmessanordnung**
Pressure measuring device
Dispositif de mesure de pression

(43) Veröffentlichungstag der Anmeldung: 06.02.1991
(73) Patentinhaber: ENDRESS + HAUSER GMBH + CO., D-79689 Maulburg (DE)
(72) Erfinder: Martin, Rainer, Dipl. Ing. (FH), D-7850 Lörrach (DE); Schneider, Georg, Dipl. Ing. Dr. Ing., D-7860 Schopfheim 3 (Langenau) (DE)
(74) Vertreter: Morstadt, Volker, Dipl.-Ing. c/o Endress + Hauser Flowtec AG

(56) Entgegenhaltungen:
- WO-A-87/07375
- DE-A- 3 235 947
- US-A- 4 414 851

## Beschreibung

Die Erfindung besteht nach Anspruch 1 in einer Druckmessanordnung mit einem Gehäuse, das einen ersten Anschluss zur Zuführung eines ersten Druckes, einen Innenraum zur Aufnahme, Befestigung und Abdichtung eines Sensorelements, eine den Innenraum umschliessende Wandung mit einem darin verlaufenden Kanal zur Führung von Referenzluft oder eines zweiten Druckes und einen Deckel aufweist. Dabei umfasst das Sensorelement eine Membran, deren Aussenseite der erste Druck zugeführt ist, und einen Grundkörper, bei dem durch eine Oeffnung hindurch die Innenseite der Membran druckbeaufschlagt ist. Ferner hat der Deckel mindestens eine Durchführung für elektrische Zuleitungen des Sensorelements, Mittel zum gasdichten Verschluss des Innenraums gegenüber der Umgebung der Druckmessanordnung, eine den Kanal in der Wandung bis zu einer Deckelöffnung führende Kanalfortsetzung und einen in die Deckelöffnung gasdicht eingepassten Einsatz, der entweder massiv ist oder einen Verbindungskanal zwischen der Kanalfortsetzung und einer von der Innenebene des Deckels bis zur Oeffnung im Grundkörper des Sensorelements geführten Verlängerung hat oder als zweiter Anschluss zur Zuführung des zweiten Druckes unter Abdichtung der Kanalfortsetzung ausgebildet ist.

In der US-A 44 14 851 ist eine Druckmessanordnung mit einem Gehäuse beschrieben, das einen ersten Anschluss zur Zuführung eines ersten Druckes, das einen Innneraum zur Aufnahme, Befestigung und Abdichtung eines Sensorelements mit einer Membran, deren Aussenseite der erste Druck zugeführt ist, und mit einem Grundkörper, bei dem durch eine Öffnung hindurch die Innenseite der Membran druckbeaufschlagt ist, und das einen Deckel mit einer Durchführung für elektrische Zuleitungen aufweist.

Bei einer in der DE-A 32 35 947 beschriebenen anderen Art von Druckmessanordnungen als der eben geschilderten ist es an sich ferner bekannt, in der jeweiligen Wandung von zwei Gehäuseteilen je einen Kanal anzuordnen, die durch Verdrehen der beiden Gehäuseteile miteinander verbind- oder unterbrechbar sind, wodurch die Drosselwirkung von ferner vorgesehenen Durchbrechungen ein- und ausschaltbar ist.

Der Erfindung liegt demgegenüber die Aufgabe zugrunde, eine Druckmessanordnung der nach der US-A 44 41 851 bekannten Art so auszubilden, daß sie entweder als Absolutdruck-, oder als Referenzdruck- oder als Differenzdruck-Messanordnung je nach dem entsprechenden Anwendungsfall modifizierbar ist, wobei eine minimale Anzahl von diesen Anwendungsfällen angepassten unterschiedlichen Teilen erforderlich sein soll und zusätzlich einer der Druckanschlüsse wahlweise an der Deckel- oder der Bodenfläche der Druckmessanordnung angebracht werden kann.

Nach einer Weiterbildung der Erfindung kann die Wandung des Gehäuses stellenweise derart verstärkt sein, dass diese Verstärkungen als Montagehilfe dienen. In diesem Falle ist es nach einer bevorzugten Ausgestaltung der Erfindung besonders vorteilhaft, mindestens zwei dieser Verstärkungen so auszubilden, dass die Uebertragung eines Einschraubmomentes ermöglicht ist, also das Einschrauben der Druckmessanordnung in ein an der Druckmessstelle vorhandenes Gewinde zu erlauben. In letzterem Fall ist es zusätzlich von Vorteil, wenn in mindestens einer Verstärkung eine Befestigungsbohrung angebracht ist, so dass z.B. nach Einschrauben der Druckmessanordnung in das erwähnte Gewinde diese zusätzlich verschraubt und damit gegen Lockerungen im Gewinde gesichert werden kann. Aber auch bei einer nichtstarren Zuführung des Druckes zum ersten Anschluss sind Befestigungsbohrungen von Vorteil.

Bei den eben erwähnten Weiterbildungen der Erfindung mit den Wandverstärkungen ist es von Vorteil, wenn der Kanal in einer von diesen Verstärkungen verläuft. Ferner ist es von Vorteil, wenn bei der Erfindung und den bisher erwähnten Weiterbildungen an der Austrittsöffnung des Kanals eine Abtropfkante ausgebildet und abgesetzt ist.

Bei einer Druckmessanordnung mit dem den Verbindungskanal aufweisenden Einsatz wird in die Austrittsöffnung des Kanals der zweite Anschluss zur Zuführung des zweiten Druckes eingesetzt. Bei einer anderen Variante der Druckmessanordnung mit dem den Verbindungskanal aufweisenden Einsatz liegt die Austrittsöffnung des Kanals zwischen der Membranebene und der Montageebene.

Die Erfindung sowie deren Ausgestaltungen und Weiterbildungen werden nun anhand der Figuren der Zeichnung näher erläutert.
- Fig. 1: zeigt schematisch in Schnittansicht ein Ausführungsbeispiel der ersten Lösungsvariante der Erfindung,
- Fig. 2: zeigt in gleicher Darstellung ein Ausführungsbeispiel der zweiten Lösungsvariante,
- Fig. 3: zeigt ebenfalls in gleicher Darstellung ein Ausführungsbeispiel der dritten Lösungsvariante der Erfindung, und
- Fig. 4: zeigt den Grundriss einer bevorzugten Weiterbildung der Erfindung.

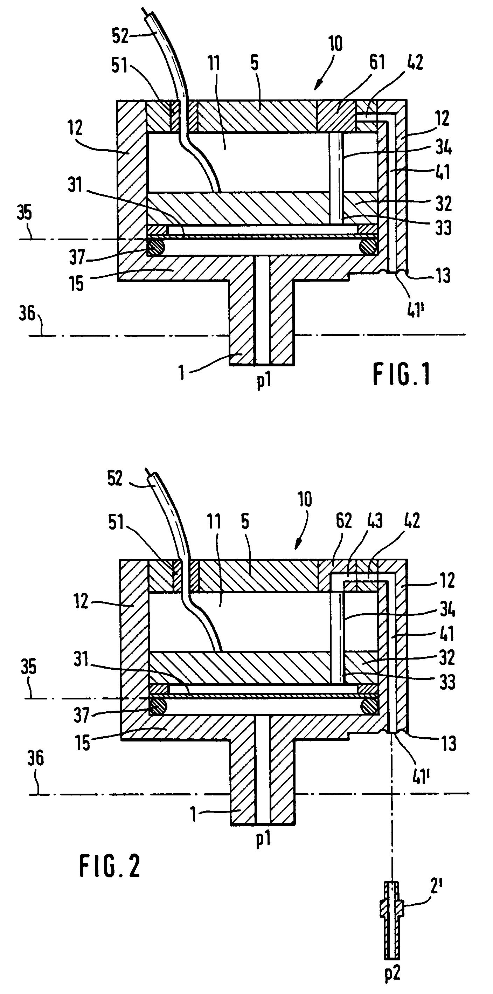

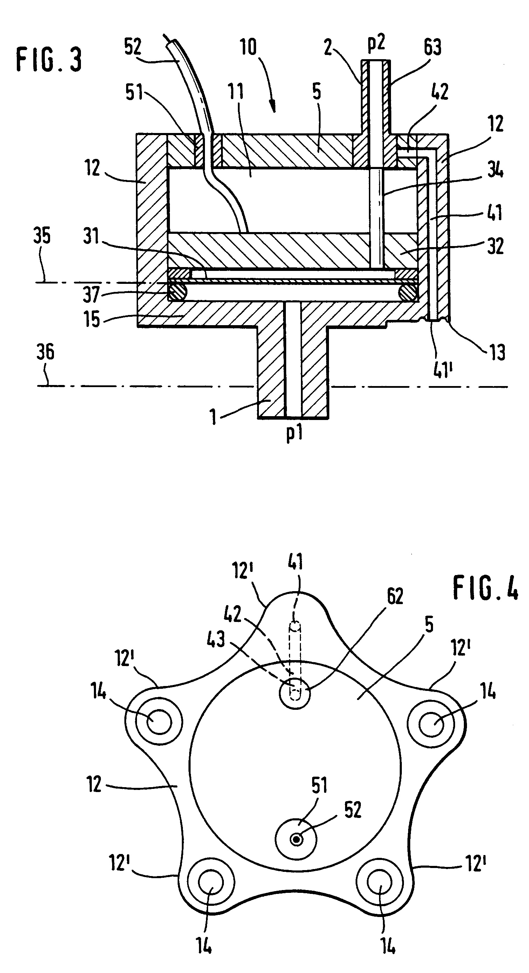

Bei dem in Fig. 1 schematisch im Schnitt gezeigten Ausführungsbeispiel der ersten Lösungsvariante der Erfindung umfasst das Gehäuse 10 der Druckmessanordnung den von ihm umschlossenen Innenraum 11, die Wandung 12, von der in Fig. 1 - ebenso wie in Fig. 2 und Fig. 3 - links und rechts entsprechende Schnittflächen zu sehen sind, den Gehäuseboden 15 und den in diesen übergehenden ersten Anschluss 1 für den ersten Druck p1. Dieser Anschluss kann in seinem Endteil ein Gewinde zum Einschrauben aufweisen, das in ein entsprechendes Gegengewinde an der Druckmessstelle, das in der Montageebene 36 mündet, eingeschraubt werden kann.

Auf der Innenseite des Gehäusebodens 15 ist das Sensorelement aus Membran 31 und Grundkörper 32 dicht eingesetzt, wie der zwischen der Innenseite des Gehäusebodens 15 und der Membran 31 angedeutete Dichtring 37 zeigt. Im Grundkörper befindet sich die Oeffnung 33, an die sich die Verlängerung 34 anschliesst, die beispielsweise als in die Oeffnung 33 eingestecktes und darin dicht befestigtes Röhrchen ausgebildet sein kann. Mittels der Oeffnung 33 ist es möglich, den von Membran 31 und Grundkörper 32 gebildeten Zwischenraum - vergleiche die am Rand von Membran und Grundkörper angedeuteten Abstandsstücke, über die diese beiden Teile auch fest miteinander verbunden sind - entweder, wie in Fig. 1 gezeigt und noch näher erläutert wird, gegenüber der Umgebung der Druckmessanordnung zu verschliessen oder, wie in den Fig. 2 und 3 gezeigt, mittels Referenzluft oder einem zweiten Druck zu beaufschlagen.

Als Sensorelement 3.. kann jedes bekannte, zur Druckmessung geeignete Sensorelement verwendet werden. Deshalb ist der Aufbau des Sensorelements in den Fig. 1 bis 3 auch nur stark schematisiert gezeigt, wobei, insbesondere aus Vereinfachungsgründen, die auf der Membran und der Innenseite des Grundkörpers angebrachten Beläge - wenn es sich z.B. um ein kapazitives Sensorelement handelt - nicht gezeigt sind.

Der an der dem Gehäuseboden 15 gegenüberliegenden Seite in die Wandung 12 gasdicht eingesetzte Deckel 5 hat die Durchführung 51 für die elektrischen Zuleitungen 52 des Sensorelements, wobei, wie üblich, diese Zuleitungen nicht direkt zu den Elektroden des Sensorelements zu führen brauchen, sondern zu einer in Mikroform realisierten Schaltung, die auf oder in der Nähe des Grundkörpers 32 angeordnet sein kann und ihrerseits mit den Sensorelementelektroden verbunden ist.

Ferner sitzt bei der Lösungsvariante nach Fig. 1 in einer Oeffnung des Deckels 5 der gasdicht darin eingepasste, massive Einsatz 61, der sowohl den Innenraum 11 als auch - wie bereits erwähnt - den Membran-Grundkörper-Zwischenraum dicht verschliesst. Es ist jedoch auch möglich, ein bereits dicht verschlossenes und gegebenenfalls innenraum-evakuiertes Sensorelement einzubauen.

In der Wandung 12 verläuft, wie der in Fig. 1 rechts liegende Teil veranschaulicht, der Kanal 41, der in die Kanalfortsetzung 42 des Deckels 5 übergeht, die ihrerseits in die erwähnte Deckelöffnung mündet. Somit verschliesst der Einsatz 61 im Ausführungsbeispiel der Fig. 1 gasdicht auch den aus Kanalfortsetzung 42 und Kanal 41 gebildeten Gesamtkanal, der über die Austrittsöffnung 41′ mit der Umgebung der Druckmessanordnung in Verbindung steht.

Diese Austrittsöffnung 41′ ist nach Fig. 1 in bevorzugter Ausgestaltung so angeordnet, dass sie zwischen der Membranebene 35 und der Montageebene 36 liegt. Auch kann sie in weiterer Ausgestaltung mit der Abtropfkante 13 versehen sein, die vom Gehäuseboden 15 leicht abgesetzt ist. Auf den Zweck und die Vorteile dieser bevorzugten Ausgestaltung soll bei Erläuterung der Lösungsvariante nach Fig. 2 eingegangen werden.

Die erste Lösungsvariante nach Fig. 1 ist, da der Membran-Grundkörper-Zwischenraum gegenüber der Umgebung der Druckmessanordnung vollständig abgedichtet ist, bei entsprechender Evakuierung dieses Zwischenraums eine Absolutdruck-Messanordnung.

Wird andererseits entsprechend dem Ausführungsbeispiel der zweiten Lösungsvariante nach Fig. 2 der massive Einsatz 61 nach Fig. 1 durch den Einsatz 62 nach Fig. 2 ersetzt, der den Verbindungskanal 43 zwischen der Kanalfortsetzung 42 und der Verlängerung 34 aufweist, so ist diese Druckmessanordnung entweder als Referenzdruck-Messanordnung oder als Differenzdruck-Messanordnung einsetzbar. In letzterem Falle wird in die Austrittsöffnung 41′ des Kanals 41 der zweite Anschluss 2′ für den zweiten Druck p2 eingesetzt. Im ersteren Falle steht dagegen über die Austrittsöffnung 41′ der Membran-Grundkörper-Zwischenraum mit der Umgebung der Druckmessanordnung in Verbindung.

In diesem Falle ergibt sich durch die bereits erwähnte, vorteilhafte Anordnung der Austrittsöffnung 41′ zwischen Membranebene 35 und Montageebene 36 der besondere Vorteil, dass die im Zwischenraum und dem ihn mit der Austrittsöffnung 41′ verbindenden Gesamtkanal stehende Luft an der Membran den Taupunkt nicht unterschreiten kann, auch wenn an der Montageebene 36 die Temperatur tiefer ist als die Umgebungstemperatur. Aufgrund des dann in der Druckmessanordnung vorhandenen Temperaturgradienten - Anschluss 1, Gehäuseboden 15, Wandung 12, Deckel 5 sind im wesentlichen metallisch - liegt die Austrittsöffnung 41′ immer auf einer tieferen Temperatur als die Membranebene 35, so dass die Betauung immer nur in der Ebene der Austrittsöffnung erfolgt.

Die weiteren Einzelheiten der Fig. 2 sind mit den entsprechenden Teilen der Fig. 1 identisch, so dass sie hier nicht nochmals erläutert werden.

Bei dem in Fig. 3 gezeigten Ausführungsbeispiel der dritten Lösungsvariante der Erfindung ist anstelle des massiven Einsatzes 61 nach Fig. 1 bzw. des den Verbindungskanal 43 aufweisenden Einsatzes 62 nach Fig. 2 der als zweiter Anschluss 2 ausgebildete Einsatz 63 in der Deckelöffnung vorgesehen, der einerseits dem Sensorelement den zweiten Druck p2 zuführt und andererseits die Kanalfortsetzung 42 in gleicher Weise wie der massive Einsatz 61 nach Fig. 1 dicht verschliesst. Somit kann die dritte Lösungsvariante nach Fig. 3 als Differenzdruck-Messanordnung mit im wesentlichen einander gegenüberliegenden Druckanschlüssen verwendet werden.

Da die weiteren Einzelheiten der Anordnung nach Fig. 3 mit den entsprechenden Einzelheiten der Anordnung nach Fig. 1 übereinstimmen, wird auch hier auf deren erneute Erläuterung verzichtet.

In Fig. 4 ist im Grundriss eine vorteilhafte Ausgestaltung der Erfindung gezeigt, die bei allen drei Lösungsvarianten angewendet werden kann. Dabei handelt es sich darum, dass die Wandung 12 nach den Fig. 1 bis 3 stellenweise so verstärkt ist, dass die Verstärkungen als Montagehilfe, insbesondere zur Uebertragung eines Einschraubmomentes dienen. Von den zu diesem Zweck möglichen Ausführungsformen ist in Fig. 4 eine solche gezeigt, die auf den Umfang gleichmässig verteilt fünf Verstärkungen 12′ aufweist, die im wesentlichen so ausgebildet sind, dass sie die fünfteilige Anordnung eines Sanitär-Bedienungsknopfes ergeben. In einem Teil der Wandverstärkungen ist nach weiterer Ausgestaltung jeweils eine Befestigungsbohrung 14 angebracht; in Fig. 4 sind dies alle Verstärkungen 12′ mit Ausnahme derjenigen, in der der Kanal 41 verläuft.

Bezüglich der drei möglichen Einsätze ist in Fig. 4 der Einsatz 62 von Fig. 2 vorausgesetzt, und demzufolge sind in Fig. 4 auch die Kanalfortsetzung 42 und der Verbindungskanal 43 angedeutet. Ferner sind in Fig. 4 der Deckel 5 und die Durchführung 51 sowie die elektrischen Zuleitungen 52 angedeutet.

Durch die erfindungsgemässe Ausgestaltung ist es somit mit wenigen standardisierten Einzelteilen - Gehäuseboden mit Wandung 12, die aus einem Stück, z.B. als Dreh- oder Spritzgussteil gefertigt werden können, Sensorelement 3.. und Deckel 5 mit nur drei verschiedenen Einsätzen und gegebenenfalls dem zweiten Anschluss 2′ - möglich, eine den verschiedenen Anwendungsfällen einfach anpassbare Druckmessanordnung herzustellen, deren für die verschiedenen Anwendungsfälle erforderliche Lagerhaltung im übrigen sehr vereinfacht ist, da diese sich im wesentlichen auf die drei verschiedenen Einsätze 61, 62, 63 bei ansonsten identischem Aufbau beschränken kann.

## Patentansprüche

1. Druckmessanordnung mit einem Gehäuse (10), das
- einen ersten Anschluss (1) zur Zuführung eines ersten Druckes (p1),
- einen Innenraum (11) zur Aufnahme, Befestigung und Abdichtung eines Sensorelements (3..) mit
- - einer Membran (31), deren Aussenseite der erste Druck (p1) zugeführt ist, und mit
- - einem Grundkörper (32), bei dem durch eine Oeffnung (33) und eine daran anschliessende Verlängerung (34) hindurch die Innenseite der Membran (31) druckbeaufschlagt ist,
- eine den Innenraum (11) umschliessende Wandung (12) mit einem darin verlaufenden Kanal (41) zur Führung von Referenzluft oder eines zweiten Druckes (p2) und
- einen Deckel (5) aufweist, der
- - mindestens eine Durchführung (51) für elektrische Zuleitungen (52) des Sensorelements (3..),
- - Mittel zum gasdichten Verschluss des Innenraums (11) gegenüber der Umgebung der Druckmessanordnung,
- - eine den Kanal (41) in der Wandung (12) bis zu einer Deckelöffnung führende Kanalfortsetzung (42) und
- - einen in die Deckelöffnung gasdicht eingepassten Einsatz (6..) aufweist, der
- - - entweder massiv ist (Einsatz 61, Fig. 1)
- - - oder einen Verbindungskanal (43) zwischen der Kanalfortsetzung (42) und der von der Innenebene des Deckels bis zur Oeffnung (33) im Grundkörper (32) des Sensorelements geführten Verlängerung (34) hat (Einsatz 62, Fig. 2)
- - - oder als zweiter Anschluss (2) zur Zuführung des zweiten Druckes (p2) unter Abdichtung der Kanalfortsetzung (42) ausgebildet ist (Einsatz 63, Fig. 3).

2. Druckmessanordnung nach Anspruch 1 mit stellenweise derart verstärkter Wandung, dass die Verstärkungen als Montagehilfe dienen.

3. Druckmessanordnung nach Anspruch 2 mit mindestens zwei derart ausgebildeten Verstärkungen (12′), dass die Uebertragung eines Einschraubmomentes ermöglicht ist.

4. Druckmessanordnung nach Anspruch 3 mit in mindestens einer Verstärkung angebrachter Befestigungsbohrung (14).

5. Druckmessanordnung nach einem der Ansprüche 2 bis 4 mit in einer der Verstärkungen verlaufendem Kanal (41).

6. Druckmessanordnung nach einem der Ansprüche 1 bis 5 mit einer an der Austrittsöffnung (41′) des Kanals (41) ausgebildeten und abgesetzten Abtropfkante (13).

7. Druckmessanordnung nach einem der Ansprüche 1 bis 5 mit dem den Verbindungskanal (43) aufweisenden Einsatz (62) und einem in die Austrittsöffnung (41′) des Kanals (41) eingesetzten zweiten Anschluss (2′) zur Zuführung des zweiten Druckes (p2).

8. Druckmessanordnung nach einem der Ansprüche 1 bis 6 mit dem den Verbindungskanal (43) aufweisenden Einsatz (62) und einer Lage der Austrittsöffnung (41′) des Kanals (41) zwischen der Membranebene (35) und einer Montageebene (36).

## Claims

1. A pressure gage with a housing (10) having
- a first connection (1) for applying a first pressure (p1),
- an interior space (11) for receiving, mounting, and sealing a sensing element (3..) comprising
- - a diaphragm (31) to the outer side of which the first pressure (p1) is applied, and
- - a substrate (32) having an opening (33) adjoined by a lengthening part (34) through which pressure is applied to the inner side of the diaphragm (31),
- a wall (12) enclosing the interior space (11) and having a channel (41) therein for guiding reference air or a second pressure (p2), and
- a cover (5) which has
- - at least one feedthrough bushing (51) for electric leads (52) to the sensing element (3..),
- - means for sealing the interior space (11) from the environment of the pressure gage,
- - a channel extension (42) extending the channel (41) in the wall (12) to an opening in the cover, and
- - an insert (6..) which is fitted in the cover opening in a gas-tight manner and which
- - - either is solid (insert 61, Fig. 1)
- - - or has a connecting channel (43) between the channel extension (42) and the lengthening part (34) extending from the inner plane of the cover to the opening (33) in the substrate (32) of the sensing element (insert 62, Fig. 2)
- - - or is designed as a second connection (2) for applying the second pressure (p2), said second connection (2) closing the channel extension (42) (insert 63, Fig. 3).

2. A pressure gage as claimed in claim 1 wherein portions of the wall are thickened so as to serve as mounting aids.

3. A pressure gage as claimed in claim 2 wherein at least two of the thickened portions (12') are shaped to permit the transmission of a screw-in torque.

4. A pressure gage as claimed in claim 3 wherein at least one of the thickened portions has a mounting hole (14).

5. A pressure gage as claimed in any one of claims 2 to 4 wherein the channel (41) extends in one of the thickened portions.

6. A pressure gage as claimed in any one of claims 1 to 5 wherein an offset drip edge (13) is provided at the outlet (41') of the channel (41).

7. A pressure gage as claimed in any one of claims 1 to 5, with the insert (62) containing the connecting channel (43) and with a second connection (2') inserted in the outlet (41') of the channel (41) and serving to apply the second pressure (p2).

8. A pressure gage as claimed in any one of claims 1 to 6, with the insert (62) containing the connecting channel (43) and with the outlet (41') of the channel (41) located between the diaphragm plane (35) and a mounting plane (36).

## Revendications

1. Dispositif de mesure de la pression comprenant un boîtier (10), qui présente
- un premier raccord (1) pour la transmission d'une première pression (p1);
- un espace intérieur (11) destiné à contenir, fixer et monter à joint étanche un élément capteur (3..), comprenant lui-même
. une membrane (31) à la face extérieure de laquelle est transmise la première pression (p1); et
. un corps de base (32), dans lequel la face intérieure de la membrane (31) peut être chargée par une pression à travers une ouverture (33) et un prolongateur (34) qui s'y raccorde;
- une paroi (12) qui entoure l'espace intérieur (11), et est munie d'un canal (41) pour la transmission d'air, de référence ou d'une deuxième pression (p2); et
- un couvercle (5) qui comprend
. au moins une traversée (51) pour le passage de conducteurs (52) d'alimentation électrique de l'élément capteur (3..);
. des moyens servant à isoler l'espace intérieur (11) de l'environnement du dispositif de mesure de la pression à joint étanche aux gaz;
. un prolongement de canal (42) qui conduit la canal (41) prévu dans la paroi (12) jusqu'à une ouverture du couvercle; et
. un élément rapporté (6..) ajusté dans l'ouverture du couvercle à joint étanche aux gaz, qui
. soit est plein (élément rapporté 61, figure 1);
. soit présente un canal de liaison (43) entre le prolongement de canal (42) et le prolongateur (34) s'étendant du plan intérieur du couvercle jusqu'à l'ouverture (33) du corps de base (32) de l'élément capteur (élément rapporté 62, figure 2):
. soit est réalisé sous la forme d'un deuxième raccord (2) pour transmettre la deuxième pression (p2) en fermant le prolongement de canal (42) à joint étanche.

2. Dispositif de mesure de la pression selon la revendication 1, présentant une paroi renforcée par endroits de telle manière que les renforcements servent d'aides pour le montage.

3. Dispositif de mesure de la pression selon la revendication 2, comprenant au moins deux renforcements (12') d'une configuration qui permet la transmission d'un couple de vissage.

4. Dispositif de mesure de la pression selon la revendication 3, présentant un perçage de fixation (14) ménagé dans au moins un renforcement.

5. Dispositif de mesure de la pression selon une des revendications 2 à 4, comprenant un canal (41) passant dans un des renforcements.

6. Dispositif de mesure de la pression selon une des revendications 1 à 5, comprenant une arête d'égouttage (13) formée au droit de l'ouverture de sortie (41') du canal (41) et disposée en retrait.

7. Dispositif de mesure de la pression selon une des revendications 1 à 5, comprenant l'élément rapporté (62) qui présente le canal de liaison (43) et un deuxième raccord (2') encastré dans l'ouverture de sortie (41') du canal (41) servant à transmettre une deuxième pression (p2).

8. Dispositif de mesure de la pression selon une des revendications 1 à 6, comprenant l'élément rapporté (62) qui présente le canal de liaison (43) et comportant une position de l'ouverture de sortie (41') du canal (41) entre le plan (35) de la membrane et un plan de montage (36).
